# FASCICULE DE BREVET EUROPEEN

(11) **EP 3 296 340 B1**
(45) Date de publication et mention de la délivrance du brevet: **14.08.2019**
(21) Numéro de dépôt: 17190925.2
(22) Date de dépôt: 13.09.2017
(51) Int. Cl.: C08G 59/40, C08G 59/68, C08G 59/72

(54) **FORMULATION DE RÉSINE ÉPOXYDE DURCISSABLE, PROCÉDÉ DE FABRICATION D'UN MATÉRIAU À PARTIR DE CETTE FORMULATION ET LEURS UTILISATIONS**
HÄRTBARE EPOXIDHARZFORMULIERUNG, HERSTELLUNGSVERFAHREN EINES MATERIALS AUS DIESER FORMULIERUNG UND IHRE VERWENDUNGSMÖGLICHKEITEN
CURABLE EPOXY RESIN FORMULATION, METHOD FOR MANUFACTURING A MATERIAL USING SAID FORMULATION AND USES THEREOF

(30) Priorité: 16.09.2016 FR 1658684
(43) Date de publication de la demande: 21.03.2018
(73) Titulaire: Schneider Electric Industries SAS, 92500 Rueil-Malmaison (FR); Université De Reims Champagne-Ardenne, 51097 Reims (FR); Centre National de la Recherche Scientifique, 75794 Paris Cedex 16 (FR)
(72) Inventeur: COQUERET, Xavier, 38050 GRENOBLE Cedex 9 (FR); RANOUX, Guillaume, 38050 GRENOBLE Cedex 9 (FR); MHANNA, Ali, 38050 GRENOBLE Cedex 9 (LB); HASSANZADEH, Mehrdad, 38050 GRENOBLE Cedex 9 (FR); OHL, Brigitte, 38050 GRENOBLE Cedex 9 (FR)
(74) Mandataire: Brevalex

(56) Documents cités:
- EP-A2- 0 257 435
- US-A- 3 379 653
- DATABASE WPI Week 200852 Thomson Scientific, London, GB; AN 2008-J18407 XP002770219, & WO 2008/081639 A1 (YAMAGUCHI E) 10 juillet 2008 (2008-07-10)

## Description

### DOMAINE TECHNIQUE

La présente invention se rapporte à une formulation de résine durcissable.

L'invention se rapporte plus particulièrement à une formulation de résine époxyde durcissable propre à conduire, après durcissement, à un matériau doté de propriétés mécaniques, diélectriques et de résistance chimique particulièrement performantes.

L'invention se rapporte également à un matériau obtenu par durcissement d'une telle formulation de résine époxyde durcissable.

Elle se rapporte encore à un procédé de fabrication d'un matériau à partir de cette formulation de résine durcissable.

L'invention se rapporte enfin aux utilisations de la formulation de résine durcissable ainsi que du matériau qui viennent d'être mentionnés, notamment dans un appareil de coupure basse, moyenne ou haute tension et, en particulier, dans un interrupteur.

### ÉTAT DE LA TECHNIQUE ANTÉRIEURE

Les résines durcissables sont généralement constituées de polymères de faible masse moléculaire qui, par une réaction chimique irréversible, conduisent à des composés macromoléculaires tridimensionnels infusibles et insolubles.

Parmi les résines durcissables, les résines dites "résines époxydes" sont largement représentées car elles permettent d'obtenir des matériaux durcis qui trouvent un très grand nombre d'applications dans de nombreux domaines, notamment dans l'industrie aéronautique et automobile, dans l'industrie électrique basse, moyenne ou haute tension, dans l'électronique, dans le sport, dans les outillages, dans les stratifiés et composites, ou encore dans les revêtements.

Les résines durcissables sont classiquement obtenues à partir de formulations qui comprennent au moins un précurseur de cette résine durcissable et un agent de réticulation, également appelé durcisseur. Par application d'une énergie thermique et/ou de rayonnements ionisants, la résine durcissable réticule pour former un réseau tridimensionnel, stable et infusible.

Les précurseurs des résines époxydes sont typiquement constitués par des polymères de faible masse moléculaire, également dénommés "pré-polymères", comprenant au moins un groupe époxyde, c'est-à-dire un ou plusieurs groupes époxyde. Ces pré-polymères peuvent également comprendre au moins un groupe hydroxyle, c'est-à-dire un ou plusieurs groupes hydroxyle.

Comme indiqué précédemment, la polymérisation de la résine durcissable pour former un réseau tridimensionnel et, partant, le matériau durci, est assurée par un agent de réticulation auquel on peut adjoindre un accélérateur, qui permet de démarrer et d'accélérer la réaction de polymérisation, ainsi qu'un ou plusieurs additifs, tels que des charges.

Parmi les agents de réticulation employés à ce jour, on peut citer les polyamines aliphatiques, les polyamides aromatiques, les polyamino-amides ainsi que les anhydrides d'acides, étant précisé que les anhydrides d'acides sont de loin les agents de réticulation les plus employés pour l'obtention de matériaux durcis destinés à l'industrie électrique basse, moyenne ou haute tension.

Or, la mise en oeuvre d'anhydrides d'acides pour l'obtention de matériaux durcis à partir de résines durcissables, notamment de résines époxyde, est suivie de près par l'Agence Européenne des Produits Chimiques ECHA. En effet, certains anhydrides d'acides, tels que l'anhydride hexahydrophtalique (HHPA) et l'anhydride méthylhexahydrophtalique (MHHPA), font d'ores et déjà partie des substances qualifiées de substances extrêmement préoccupantes (en anglais, Substances of Very High Concern et abrégé SVHC) et d'une liste de substances dites "candidates". Ces anhydrides HHPA et MHHPA vont être prochainement incorporés à l'Annexe XIV du règlement REACH et, par conséquent, être soumis à une procédure d'autorisation pour pouvoir être utilisés. D'autres anhydrides d'acides, notamment l'anhydride méthyltétrahydrophtalique (MTHPA), risquent de prochainement intégrer cette liste de substances dites "candidates" puis, à moyen terme, l'Annexe XIV.

Même si le calendrier concernant leur inscription sur la liste des substances dites "candidates" est différent, ces anhydrides d'acides HHPA, MHHPA et MTHPA, connus comme sensibilisants respiratoires, présentent des niveaux de danger similaires.

Il existe donc un besoin clairement exprimé de trouver une alternative aux formulations de résines durcissables qui mettent en oeuvre des anhydrides d'acides comme agents de réticulation, cette alternative permettant de répondre aux prescriptions de ce règlement REACH. EP0257435 divulgue une composition comprenant une résine époxyde et un complexe trifluorure de bore-amine.

Le but de l'invention est donc de proposer une formulation de résine durcissable qui, après polymérisation, permette d'obtenir des matériaux durcis dotés de propriétés mécaniques, diélectriques et de résistance chimique pour le moins comparables à celles des matériaux durcis obtenus avec la mise en oeuvre des agents de réticulation actuellement utilisés et, en particulier, les anhydrides d'acides, mais dans des conditions de sécurité humaine et de sécurité environnementale plus favorables.

Un autre but de la présente invention est de proposer un procédé de fabrication d'un matériau durci à partir d'une telle formulation, ce procédé pouvant être aisément mis en oeuvre dans les équipements et outillages des installations industrielles actuellement utilisées pour la fabrication des résines époxyde recourant notamment aux anhydrides d'acides comme agents de réticulation.

### EXPOSÉ DE L'INVENTION

Ces buts ainsi que d'autres encore sont atteints, en premier lieu, par une formulation de résine durcissable du type précité, c'est-à-dire par une formulation résultant de la mise en contact d'une composition comprenant au moins un précurseur P de la résine durcissable, ce précurseur P comprenant au moins un groupe époxyde et, le cas échéant, au moins un groupe hydroxyle, avec un amorceur R et un accélérateur A.

Selon l'invention, l'amorceur R est choisi parmi le groupe constitué par un complexe trifluorure de bore-amine et le tétrakis(pentafluorophényl)borate(1-) de (4-isopropylphényl)(4-méthylphényl)iodonium, et l'accélérateur A est un peroxyde organique.

La sélection de ces amorceur R et accélérateur A particuliers tels que définis ci-dessus permet d'obtenir une formulation de résine durcissable dont les conditions de transformation peuvent être très aisément adaptées, comme on le verra ci-après.

De surcroît, la formulation de résine durcissable selon l'invention présente l'avantage indéniable de permettre la substitution des anhydrides d'acides par des composés de remplacement plus sûrs pour la santé humaine et pour l'environnement et, donc, de répondre à l'un des objectifs du règlement REACH. En effet, et contrairement aux anhydrides d'acides tels que HHPA, MHHPA et MTHPA, qui sont sensibilisants respiratoires, ni l'amorceur R, ni l'accélérateur A ne présentent ce type de danger.

Comme indiqué précédemment, la formulation de résine durcissable selon l'invention résulte de la mise en contact d'une composition comprenant au moins un précurseur P de la résine durcissable avec un amorceur R et un accélérateur A.

La composition qui est mise en contact avec l'amorceur R et l'accélérateur A peut ne comprendre qu'un seul précurseur P, mais elle peut également comprendre un mélange de deux, trois, voire plus, précurseurs P.

Que la composition comprenne un ou plusieurs précurseurs P, ce ou ces précurseurs P comprennent chacun au moins un groupe époxyde.

Cette condition de présence d'au moins un groupe époxyde étant remplie, le choix de ce ou ces précurseurs P n'est pas spécialement limité.

Ainsi, la formulation selon l'invention peut notamment mettre en oeuvre des précurseurs P identiques ou similaires à ceux qui sont actuellement mis en oeuvre avec les agents de réticulation classiques que sont les polyamines aliphatiques, les polyamides aromatiques, les polyamino-amides et, bien entendu, les anhydrides d'acides.

Ce ou tout ou partie de ces précurseurs P peut également comprendre, en plus du ou des groupes époxyde, un ou plusieurs groupes hydroxyle.

Ce ou ces précurseurs P peuvent être, en tout ou partie, d'origine fossile ou d'origine biosourcée ou renouvelable.

La composition de la formulation selon l'invention peut n'être constituée que d'un seul précurseur P d'origine fossile ou d'un mélange de deux, trois, voire plus, précurseurs P d'origine fossile.

De la même manière, la composition de la formulation selon l'invention peut n'être constituée que d'un seul précurseur P d'origine biosourcée ou d'un mélange de deux, trois, voire plus, précurseurs P d'origine biosourcée.

La composition de la formulation selon l'invention peut également comprendre un ou plusieurs précurseurs P d'origine fossile en mélange avec un ou plusieurs précurseurs P d'origine biosourcée.

Ce ou ces précurseurs P peuvent notamment être préparés selon les différentes voies suivantes :
(1) par réaction de l'épichlorhydrine avec des polyols, tels que des alcools aliphatiques ou des polyphénols, ou bien avec des acides carboxyliques. Dans le premier cas, le précurseur P se présente sous la forme d'un éther glycidylique, tandis que dans le second cas, le précurseur P se présente sous la forme d'un ester glycidylique ;
(2) par oxydation de doubles liaisons d'un composé par un agent oxydant, tel que l'acide peracétique ou l'acide perbenzoïque ; ou encore
(3) par la combinaison des deux types de réactions qui viennent d'être citées.

Ainsi, selon un mode particulier de réalisation de l'invention selon la voie (1), le ou les précurseurs P peuvent être formés par :
- les résines époxyde obtenues par réaction de l'épichlorhydrine avec du bisphénol A ou du bisphénol F, conduisant respectivement à la résine de diglycidyléther du bisphénol A (notée DGEBA) et à la résine de diglycidyléther du bisphénol F (notée DGEBF) ; ou encore
- les résines époxydes obtenues par réaction de l'épichlorhydrine avec un phénol-novolaque ou un crésol-novolaque, conduisant respectivement à une résine époxyde phénol-novolaque (notée EPN) et une résine époxyde crésol-novolaque (notée ECN).

Historiquement d'origine fossile, l'épichlorhydrine et le bisphénol A peuvent maintenant être d'origine biosourcée.

À titre d'exemples de précurseurs P obtenus selon la voie (2), on peut citer les résines de polybutadiène époxydé à groupes hydroxyle terminaux telles que celles commercialisées par la Société Cray Valley sous les dénominations Poly bd® 600E et Poly bd® 605E.

À titre d'exemple de précurseur P obtenu selon la voie (3), on peut citer la résine de diglycidyl-4,5-époxycyclohexane-1,2-dicarboxylate.

En plus des résines qui viennent d'être citées, le ou les précurseurs P peuvent être formés par :
- des résines époxyde cycloaliphatiques telles que celles commercialisées par la Société Huntsman sous les dénominations Araldite® CY 179 et Araldite® CY 184 ;
- des résines époxyde de polyoxyalkylène glycol ; ou encore
- des résines époxyde de silicone.

En résumé, dans une version avantageuse, dans la composition de la formulation selon l'invention, chaque précurseur P peut être choisi parmi le groupe constitué par une résine de diglycidyléther du bisphénol A, une résine de diglycidyléther du bisphénol F, une résine époxyde phénol-novolaque, une résine époxyde crésol-novolaque, une résine époxyde cycloaliphatique, une résine époxyde de polyoxyalkylène glycol, une résine époxyde de silicone, une huile végétale époxydée, un polyol époxydé et un polyphénol époxydé.

Les trois derniers composés époxydés, d'origine biosourcée, sont détaillés ci-après.

Dans une version préférentielle, la composition de la formulation selon l'invention comprend une résine de diglycidyléther du bisphénol A, notée DGEBA, cette résine pouvant être seule ou en mélange avec un ou plusieurs autres précurseurs P.

On rappelle que la résine DGEBA résulte de la réaction de l'épichlorhydrine avec le bisphénol A, en présence de soude, et répond à la formule suivante :

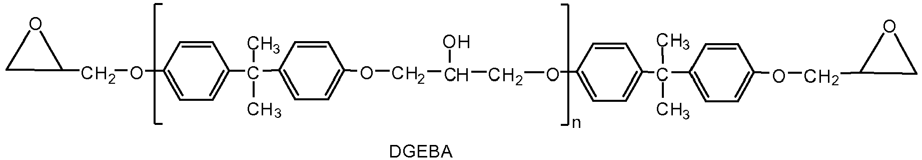

Dans une version encore plus préférentielle, la composition de la formulation selon l'invention comprend une résine DGEBA dans laquelle 0 < n < 1, cette résine se présentant alors sous une forme liquide qui favorise la mise en contact du précurseur DGEBA avec l'amorceur R et l'accélérateur A.

Parmi ces résines DGEBA qui se présentent sous une forme liquide, on peut notamment citer la résine DGEBA commercialisée par la Société Dow Chemical sous la dénomination D.E.R.™ 330.

Lorsqu'ils sont d'origine biosourcée (renouvelable), ce ou ces précurseurs P peuvent notamment être obtenus à partir :
- d'huiles végétales telles que des huiles de ricin, de lin ou de soja,
- de sucroses, d'amidon, d'isosorbide, de substances furaniques, de tanin, de lignine, de polyphénols, de vanilline, de resvératrol, de cardanol ou de curcumin,
- de polyols ou de polyphénols bio-sourcés,
ces huiles végétales, mélanges, polyols et autres polyphénols pouvant être époxydés par :
- des réactifs permettant l'introduction d'un ou plusieurs groupes époxyde,
- des analogues d'époxydes de type oxétane qui sont des hétérocycles oxygénés à 4 chaînons, ou encore
- des diluants réactifs époxyde tels que l'éther phénylglycidyle, le limonène monoépoxyde et le limonène diépoxyde.

Des précurseurs P d'origine biosourcée obtenus à partir de polyphénols sont, par exemple, décrits dans la publication de H. Nouailhas et al., ("Synthesis and Properties of Biobased Epoxy Resins. Part 1. Glycidylation of Flavonoids by Epichlorohydrin", Journal of Polymer Science Part A : Polymer Chemistry, 2011, 49, 2261-2270), référencée [1] à la fin de la présente description.

Dans une version préférentielle, la composition de la formulation selon l'invention comprend une huile de soja époxydée (en anglais, Epoxidised Soja Oil, abrégé ESO), cette huile de soja époxydée pouvant être le seul précurseur P de la composition ou bien être en mélange avec un ou plusieurs autres précurseurs P.

À titre d'exemples d'huiles de soja époxydées, on peut citer celle commercialisée par la Société Arkema sous la dénomination Vikoflex® 7170 ou encore celle commercialisée par la Société Dixie Chemical sous l'acronyme MAESO pour "Maleinated Acrylated Epoxidized Soybean Oil".

Lorsqu'elle est employée en mélange avec un ou plusieurs autres précurseurs P, l'huile de soja époxydée permet non seulement de fluidifier la composition de la formulation selon l'invention, mais également de réduire la température de transition vitreuse (Tg) de la formulation.

Dans une version préférentielle, la composition de la formulation selon l'invention comprend une résine DGEBA en mélange avec une huile de soja époxydée.

Dans une version avantageuse de l'invention, le ou les précurseurs P sont présents dans une proportion massique allant de 29,5 % à 99,9 %, avantageusement de 28 % à 70 % et, préférentiellement, de 26 % à 36 %, par rapport à la masse totale de la formulation.

Pour l'obtention de la formulation de résine durcissable selon l'invention, la composition, qui vient d'être décrite et qui comprend au moins un précurseur P de la résine durcissable, est mise en contact avec un amorceur R et un accélérateur A.

Rien n'interdit d'envisager une mise en contact de la composition ci-dessus avec deux, trois, voire plus, amorceurs R et/ou accélérateurs A.

Toutefois, dans une variante plus particulièrement préférée de la formulation selon l'invention, cette mise en contact de la composition comprenant un ou plusieurs précurseurs P est réalisée avec un seul amorceur R et un seul accélérateur A.

Le rôle de l'amorceur R est de déclencher (d'amorcer) la polymérisation cationique réticulante se produisant au niveau des groupes époxyde du ou des précurseurs P.

Comme indiqué précédemment, cet amorceur R est choisi parmi le groupe constitué par un complexe trifluorure de bore-amine et le tétrakis(pentafluorophényl)borate(1-) de (4-isopropylphényl)(4-méthylphényl)iodonium, ces composés présentant une toxicité plus faible que les agents de réticulation employés à ce jour, tels que les anhydrides d'acides.

Lorsque l'amorceur R est un complexe trifluorure de bore-amine, il peut notamment être choisi parmi le complexe trifluorure de bore-méthylamine et le complexe trifluorure de bore-éthylamine.

Dans une version plus particulièrement avantageuse de l'invention, l'amorceur R est le tétrakis(pentafluorophényl)borate(1-) de (4-isopropylphényl)(4-méthylphényl)iodonium. Ce sel d'iodonium, qui comprend un anion peu nucléophile, en l'espèce le tétrakis(pentafluorophényl)borate, présente un intérêt en termes de réactivité et également l'avantage de ne pas faire partie de la liste des substances qualifiées de substances extrêmement préoccupantes (SVHC).

Le tétrakis(pentafluorophényl)borate de (4-isopropylphényl)(4-méthylphényl)iodonium est notamment disponible auprès de la Société BlueStar Silicones sous la dénomination Bluesil™PI 2074.

Dans une version avantageuse de l'invention, l'amorceur R est présent dans une proportion massique allant de 0,01 % à 1 %, avantageusement de 0,05 % à 0,5 % et, préférentiellement, de 0,1 % à 0,3 %, par rapport à la masse totale de la formulation.

L'accélérateur A est, quant à lui, un peroxyde organique. Un tel composé permet d'agir sur la réactivité ainsi que sur l'avancement de la réaction de polymérisation.

Dans une version avantageuse de l'invention, l'accélérateur A est le peroxyde de dicumyle ou le peroxybenzoate de *tert*-butyle, ce dernier peroxyde organique étant notamment commercialisé par la Société Arkema sous la référence Luperox® P.

Dans une version avantageuse de l'invention, l'accélérateur A est présent dans une proportion massique allant de 0,01% à 1%, avantageusement de 0,05 % à 0,5 % et, préférentiellement, de 0,1 % à 0,3 %, par rapport à la masse totale de la formulation.

Dans une version plus particulièrement avantageuse de l'invention, l'ensemble formé par l'amorceur R et l'accélérateur A est présent dans une proportion massique allant de 0,02 % à 2 %, avantageusement de 0,1 % à 1 % et, préférentiellement, de 0,2 % à 0,50 %, par rapport à la masse totale de la formulation.

Dans une variante, la formulation de résine durcissable selon l'invention peut, en outre, comprendre au moins un additif F.

La formulation de résine durcissable selon l'invention peut ne comprendre qu'un seul additif F, mais elle peut également comprendre un mélange de deux, trois, voire plus, additifs F.

Ce ou ces additifs F peuvent être présents dans la composition comprenant le ou les précurseurs P de la résine durcissable ou, au contraire, être mis en contact avec cette composition.

Le ou les additifs F sont avantageusement choisis parmi le groupe constitué par les charges, les colorants, les pigments, les agents retardateurs de flamme, les agents antioxydants, les lubrifiants, les plastifiants, les diluants réactifs et les solvants.

Dans une version particulière de l'invention, les charges sont des charges minérales.

Ces charges peuvent se présenter sous la forme de fibres et peuvent notamment être des fibres de verre, des fibres de basalte ou encore des fibres de wollastonite.

Ces charges peuvent également se présenter sous la forme de particules, telles que des particules d'oxydes métalliques (alumine, alumine hydratée, silice), de carbonate de calcium (craie), de silicates ou encore de la poudre de verre.

En particulier, lorsque la charge est constituée par une silice, on peut utiliser une silice silanisée, une silice cristalline broyée ou encore une silice amorphe, sans danger cancérigène.

À titre d'exemples de silice cristalline broyée, on peut mettre en oeuvre les silices broyées, également dénommées farines de silice, qui sont notamment commercialisées par la Société Sibelco, par exemple la silice broyée référencée E6.

Dans une version avantageuse, lorsque la formulation selon l'invention comprend un ou plusieurs additifs F, et notamment des charges, ce ou ces additifs F sont présents dans une proportion massique pouvant aller jusqu'à 70 %, cette proportion massique étant avantageusement comprise entre 55 % et 68 % et, préférentiellement, entre 59 % et 63 %, par rapport à la masse totale de la formulation.

Dans une version plus particulièrement préférée, la formulation de résine durcissable selon l'invention comprend les proportions massiques suivantes, par rapport à la masse totale de la formulation :
- de 29,5 % à 99,9 % du ou des précurseurs P,
- de 0,1 % à 0,5 % de l'ensemble formé par l'amorceur R et l'accélérateur A, et
- de 0 % à 70 % du ou des additifs F.

La présente invention se rapporte, en deuxième lieu, à un matériau.

Selon l'invention, ce matériau est obtenu par durcissement d'une formulation de résine durcissable telle que définie ci-dessus, les caractéristiques avantageuses de cette formulation pouvant être prises seules ou en combinaison.

Le matériau selon l'invention se caractérise par des propriétés mécaniques, diélectriques et de résistance chimique pour le moins comparables à celles des matériaux durcis obtenus avec la mise en oeuvre des agents de réticulation actuellement utilisés, tels que les anhydrides d'acides.

La présente invention se rapporte, en troisième lieu, à un procédé de fabrication d'un matériau à partir d'une formulation de résine durcissable.

Selon l'invention, ce procédé comprend successivement et dans cet ordre :
(a) une mise en contact d'une composition comprenant au moins un précurseur P de la résine durcissable, ce précurseur P comprenant au moins un groupe époxyde et, le cas échéant, au moins un groupe hydroxyle, avec
   - un amorceur R et un accélérateur A, l'amorceur R étant choisi parmi le groupe constitué par un complexe trifluorure de bore-amine et le tétrakis(pentafluorophényl)borate(1-) de (4-isopropylphényl)(4-méthylphényl)iodonium, et l'accélérateur A étant un peroxyde organique,
      et, de manière optionnelle,
   - au moins un additif F choisi parmi le groupe constitué par les charges, les colorants, les pigments, les agents retardateurs de flamme, les agents antioxydants, les lubrifiants, les plastifiants, les diluants réactifs et les solvants,
(b) une mise en forme de la formulation obtenue à l'issue de l'étape (a), et
(c) une application d'une énergie à la formulation mise en forme à l'étape (b), moyennant quoi on obtient le matériau par polymérisation de la résine durcissable.

Les caractéristiques décrites précédemment en liaison avec la formulation de résine durcissable et, notamment, les caractéristiques relatives au(x) précurseurs P, à l'amorceur R, à l'accélérateur A et, le cas échéant, au(x) additif(s) F, sont bien entendu applicables au présent procédé de fabrication du matériau obtenu à partir de cette même formulation.

L'étape (a) de mise en contact de la composition, qui comprend le ou les précurseurs P de la résine durcissable, avec l'amorceur R, l'accélérateur A et, le cas échéant, le ou les additif(s) F, comprend bien entendu le mélange et/ou le malaxage de ces différents composés P, R, A et éventuellement F, pour l'obtention de la formulation, cette formulation étant la plus homogène possible.

L'étape (b) de mise en forme de la formulation doit être comprise comme comprenant le dépôt de la formulation telle qu'issue de l'étape (a) dans l'empreinte d'un moule, cette empreinte déterminant la forme finale du matériau.

Cette étape (b) de mise en forme peut, par exemple, être effectuée par la mise en oeuvre d'une technique de coulée conventionnelle, par gravitation sous vide ou par un procédé de gélification sous pression automatisée désignée par l'acronyme GPA.

L'application d'une énergie à l'étape (c) permet, en particulier, d'amorcer la réaction de polymérisation de la formulation selon l'invention.

Dans une version avantageuse du procédé selon l'invention, l'énergie qui est appliquée lors de l'étape (c) peut être une énergie thermique.

Cette énergie thermique peut être appliquée seule ou bien être combinée à des rayonnements ionisants, tels qu'un faisceau d'électrons.

L'invention se rapporte, en quatrième lieu, aux utilisations de la formulation de résine durcissable et du matériau tels que définis ci-dessus, les caractéristiques avantageuses de ces formulation et matériau pouvant être prises seules ou en combinaison.

La formulation de résine durcissable selon l'invention peut être notamment utilisée pour fabriquer un matériau destiné à l'industrie aéronautique et automobile, à l'industrie électrique, qu'elle soit basse, moyenne ou haute tension, à l'électronique, au sport, aux outillages, aux stratifiés et composites, ou encore aux revêtements.

Dans une version avantageuse de l'invention, la formulation de résine durcissable peut être utilisée pour fabriquer un matériau isolant, notamment un matériau isolant d'un appareil de coupure, qu'il soit de basse tension, de moyenne tension ou de haute tension.

Dans ce qui précède et ce qui suit, les expressions "basse tension", "moyenne tension" et "haute tension" sont utilisées dans leurs acceptations habituelles, à savoir:
- l'expression "basse tension" désigne une tension qui est strictement inférieure à 1 kV en courant alternatif et à 1,5 kV en courant continu,
- l'expression "moyenne tension" désigne une tension qui est supérieure ou égale à 1 kV en courant alternatif et à 1,5 kV en courant continu mais inférieure ou égale à 52 kV en courant alternatif et à 75 kV en courant continu, et
- l'expression "haute tension" désigne une tension qui est strictement supérieure à 52 kV en courant alternatif et à 75 kV en courant continu.

Dans une version préférée de l'invention, cet appareil de coupure est choisi parmi un interrupteur, un disjoncteur, un combiné interrupteur-fusibles, un sectionneur, un sectionneur de mise à la terre et un contacteur.

De la même manière, le matériau selon l'invention peut être utilisé dans l'industrie aéronautique et automobile, dans l'industrie électrique, qu'elle soit basse, moyenne ou haute tension, dans l'électronique, dans le sport, dans les outillages, dans les stratifiés et composites, ou encore dans les revêtements.

Dans une version avantageuse de l'invention, ce matériau peut être utilisé comme matériau d'isolation électrique dans un appareil de coupure, de basse, moyenne ou haute tension, cet appareil de coupure pouvant avantageusement être un interrupteur, un disjoncteur, un combiné interrupteur-fusibles, un sectionneur, un sectionneur de mise à la terre et un contacteur.

D'autres caractéristiques et avantages de l'invention apparaîtront mieux à la lecture du complément de description qui suit, qui se rapporte à des exemples de préparation de formulations de résine durcissable selon l'invention et de référence, à l'obtention des matériaux correspondants par polymérisation de la résine durcissable ainsi qu'à l'évaluation de certaines propriétés diélectriques de ces matériaux.

### EXPOSÉ DÉTAILLÉ DE MODES DE RÉALISATION PARTICULIERS

### Produits de départ

* Les composés mis en oeuvre pour la préparation de la formulation de résine durcissable selon l'invention, notée F_{I}, avec leurs proportions massiques respectives, sont les suivants :
   - 33 % d'un premier précurseur, noté P1, formé par la résine DGEBA commercialisée par la Société Dow Chemical sous la dénomination D.E.R.™ 330,
   - 6,625 % d'un second précurseur, noté P2, formé par une huile de soja époxydée ESO commercialisée par la Société Arkema sous la dénomination Vikoflex® 7170,
   - 0,25 % d'un amorceur R formé par le tétrakis(penta-fluorophényl)borate de (4-isopropylphényl)(4-méthylphényl)iodonium, commercialisé par la Société BlueStar Silicones sous la dénomination Bluesil™PI 2074,
   - 0,125 % d'un accélérateur A formé par le peroxybenzoate de *tert*-butyle commercialisé par la Société Arkema sous la référence Luperox® P, et
   - 60 % d'un additif F constitué par de la silice cristalline broyée commercialisée par la Société Sibelco sous la référence Silice broyée E6.
* Les composés mis en oeuvre pour la préparation de la formulation de résine durcissable de référence, notée F_{R}, avec leurs proportions massiques respectives, sont les suivants :
   - 22,2 % d'un précurseur P formé par la résine DGEBA commercialisée par la Société Huntsman sous la dénomination Araldite® CY 225,
   - 17,8 % d'un agent de réticulation formé par un anhydride d'acide, en l'espèce l'anhydride méthyltétrahydrophtalique (MTHPA), commercialisé par la Société Huntsman sous la dénomination Aradur® HY 925, et
   - 60 % de l'additif F (Silice broyée E6).

### Préparation des formulations de résine durcissable selon l'invention et de référence

* Dans un pot placé dans un malaxeur, on introduit le premier précurseur P1 (résine DGEBA, D.E.R.™ 330) et le second précurseur P2 (huile ESO, Vikoflex® 7170). À la composition ainsi obtenue, on ajoute, toujours sous agitation, l'amorceur R (sel d'iodonium, Bluesil™PI 2074) puis l'accélérateur A (peroxyde organique, Luperox® P).
   La formulation ainsi formée dans le pot est portée à une température de 60 °C sous un vide de 5 mm Hg puis est maintenue, à cette même température de 60 °C et sous ce même vide de 5 mm Hg, sous agitation à 400 tr/min, pendant 15 min.
   Au terme de ces 15 min, on introduit dans ce mélange malaxé, toujours sous agitation, l'additif F qui aura été préalablement chauffé à 60 °C.
   La formulation Fi ainsi obtenue est maintenue sous agitation à 400 tr/min, à la température de 60 °C pendant 30 min, pour obtenir une bonne homogénéisation de la formulation de résine durcissable avant l'étape d'amorçage de la réaction de polymérisation de cette dernière.
* Le protocole qui vient d'être décrit a été reproduit pour la préparation de la formulation de résine durcissable de référence F_{R}, avec introduction, dans le pot placé dans le malaxeur, du précurseur P, de l'anhydride d'acide MTHPA et de l'additif F.

### Mise en forme des formulations de résine durcissable F_{I} et F_{R}

Chacune des formulations homogènes de résine durcissable F_{I} et F_{R} a été déposée, par gravitation, dans l'empreinte d'un moule pour l'obtention d'éprouvettes présentant des épaisseurs de 3 mm chacune.

### Obtention des matériaux par polymérisation des résines durcissables

La polymérisation de chacune des résines durcissables a été obtenue en maintenant les moules sous autoclave pendant 3 h à une température de 140 °C.

À partir des formulations F_{I} et F_{R}, on a obtenu des séries d'éprouvettes de 3 mm d'épaisseur formées des matériaux respectivement notés M_{I} et M_{R}.

### Évaluation des propriétés diélectriques des matériaux M_{I} et M_{R}

Les éprouvettes de matériaux M_{I} et M_{R} ont été soumises à des tests de caractérisation des matériaux isolants pour déterminer :
- la permittivité relative ainsi que le facteur de dissipation tangente de l'angle de perte, ces caractéristiques ayant été mesurées conformément à la norme CEI 60250 ; et
- la tension de perforation ainsi que la rigidité diélectrique, qui ont été mesurées conformément à la norme CEI 60243, la rigidité diélectrique étant calculée en divisant la tension de perforation par l'épaisseur de l'éprouvette.

Les résultats des tests de permittivité relative et de facteur de dissipation sont rassemblés dans le tableau 1 ci-après, étant précisé que les valeurs mentionnées correspondent à la moyenne des valeurs obtenues sur des lots de 3 éprouvettes, soumises à des températures d'environnement de 25 °C, de 60 °C et de 90 °C:

**Tableau 1**

| Formulation | Matériau | Température (°C) | Permittivité relative | Facteur de dissipation |
|---|---|---|---|---|
| F_{I} | M_{I} | 25 | 3,7 | 0,023 |
| | | 60 | 3,8 | 0,031 |
| | | 90 | 3,9 | 0,041 |
| F_{R} | M_{R} | 25 | 3,6 | 0,024 |
| | | 60 | 3,9 | 0,037 |
| | | 90 | 3,9 | 0,048 |

Le Tableau 1 montre que les valeurs de permittivité relative et de facteur de dissipation mesurées avec le matériau M_{I} obtenu à partir de la formulation F_{I} selon l'invention sont tout à fait comparables à celles mesurées avec le matériau M_{R} obtenu à partir de la formulation F_{R} de référence qui met en oeuvre un anhydride d'acide.

Les résultats des tests de perforation ainsi que de rigidité diélectrique sont rassemblés dans le tableau 2 ci-après, étant précisé que les valeurs de moyenne et de médiane mentionnées ont été obtenues sur des lots de 5 éprouvettes :

**Tableau 2**

| Formulation | Matériau | Tension de perforation (kVeff) | | Rigidité diélectrique (kVeff/mm) | |
|---|---|---|---|---|---|
| | | moyenne | médiane | moyenne | médiane |
| F_{I} | M_{I} | 40,0 | 40,0 | 13,6 | 13,5 |
| F_{R} | M_{R} | 32,8 | 33,0 | 11,1 | 11,1 |

Le Tableau 2 met clairement en évidence le fait que les valeurs de tension de perforation et de rigidité diélectriques mesurées avec le matériau M_{I} obtenu à partir de la formulation F_{I} selon l'invention sont nettement supérieures à celles mesurées avec le matériau M_{R} obtenu à partir de la formulation F_{R} de référence qui met en oeuvre un anhydride d'acide.

En d'autres termes, les propriétés diélectriques d'un matériau obtenu à partir d'une formulation de résine durcissable selon l'invention sont supérieures à celles d'un matériau similaire obtenu à partir d'une formulation comparable, mettant en oeuvre un anhydride d'acide.

### BIBLIOGRAPHIE

[1] H. Nouailhas et al., Journal of Polymer Science Part A : Polymer Chemistry, 2011, 49, pages 2261-2270

## Revendications

1. Formulation de résine durcissable, cette formulation résultant de la mise en contact d'une composition comprenant au moins un précurseur P de la résine durcissable, ce précurseur P comprenant au moins un groupe époxyde et, le cas échéant, au moins un groupe hydroxyle, avec un amorceur R et un accélérateur A, **caractérisée en ce que** l'amorceur R est choisi parmi le groupe constitué par un complexe trifluorure de bore-amine et le tétrakis(pentafluorophényl)borate(1-) de (4-isopropylphényl)(4-méthylphényl)iodonium, et **en ce que** l'accélérateur A est un peroxyde organique.

2. Formulation selon la revendication 1, dans laquelle chaque précurseur P est choisi parmi le groupe constitué par une résine de diglycidyléther du bisphénol A, une résine de diglycidyléther du bisphénol F, une résine époxyde phénol-novolaque, une résine époxyde crésol-novolaque, une résine époxyde cycloaliphatique, une résine époxyde de polyoxyalkylène glycol, une résine époxyde de silicone, une huile végétale époxydée, un polyol époxydé et un polyphénol époxydé.

3. Formulation selon la revendication 2, dans laquelle la composition comprend une résine de diglycidyléther du bisphénol A.

4. Formulation selon la revendication 2 ou 3, dans laquelle la composition comprend une huile de soja époxydée.

5. Formulation selon l'une quelconque des revendications 1 à 4, dans laquelle l'amorceur R est le tétrakis(pentafluorophényl)borate(1-) de (4-isopropylphényl)(4-méthylphényl)iodonium.

6. Formulation selon l'une quelconque des revendications 1 à 5, dans laquelle l'accélérateur A est le peroxyde de dicumyle ou le peroxybenzoate de *tert*-butyle.

7. Formulation selon l'une quelconque des revendications 1 à 6, qui comprend, en outre, au moins un additif F choisi parmi le groupe constitué par les charges, les colorants, les pigments, les agents retardateurs de flamme, les agents antioxydants, les lubrifiants, les plastifiants, les diluants réactifs et les solvants.

8. Formulation selon l'une quelconque des revendications 1 à 7, dans laquelle les proportions massiques, par rapport à la masse totale de la formulation, sont les suivantes :
- de 29,5 % à 99,9 % du ou des précurseurs P,
- de 0,1 % à 0,5 % de l'ensemble formé par l'amorceur R et l'accélérateur A, et
- de 0 % à 70 % du ou des additifs F.

9. Matériau, **caractérisé en ce qu'**il est obtenu par durcissement d'une formulation de résine durcissable selon l'une quelconque des revendications 1 à 8.

10. Procédé de fabrication d'un matériau à partir d'une formulation de résine durcissable selon l'une quelconque des revendications 1 à 8, lequel procédé comprend successivement et dans cet ordre :
(a) une mise en contact d'une première composition comprenant au moins un précurseur P de la résine durcissable, ce précurseur P comprenant au moins un groupe époxyde et, le cas échéant, au moins un groupe hydroxyle, avec un amorceur R et un accélérateur A, l'amorceur R étant choisi parmi le groupe constitué par un complexe trifluorure de bore-amine et le tétrakis(pentafluorophényl)borate(1-) de (4-isopropylphényl)(4-méthylphényl)iodonium, et l'accélérateur A étant un peroxyde organique,
(b) une mise en forme de la formulation obtenue à l'issue de l'étape (a), et
(c) une application d'une énergie à la formulation mise en forme à l'étape (b), moyennant quoi on obtient le matériau par polymérisation de la résine durcissable.

11. Procédé selon la revendication 10, dans lequel, lors de l'étape (c), l'énergie est une énergie thermique.

12. Utilisation de la formulation selon l'une quelconque des revendications 1 à 8 pour la fabrication d'un matériau destiné à l'industrie aéronautique et automobile, à l'industrie électrique basse, moyenne ou haute tension, à l'électronique, au sport, aux outillages, aux stratifiés et composites, ou encore aux revêtements.

13. Utilisation selon la revendication 12, pour la fabrication d'un matériau isolant, notamment d'un matériau isolant d'un appareil de coupure basse, moyenne ou haute tension, tel qu'un interrupteur, un disjoncteur, un combiné interrupteur-fusibles, un sectionneur, un sectionneur de mise à la terre ou un contacteur.

14. Utilisation d'un matériau selon la revendication 9 dans l'industrie aéronautique et automobile, dans l'industrie électrique basse, moyenne ou haute tension, dans l'électronique, dans le sport, dans les outillages, dans les stratifiés et composites, ou encore dans les revêtements.

15. Utilisation selon la revendication 14 comme matériau d'isolation électrique dans un appareil de coupure basse, moyenne ou haute tension, tel qu'un interrupteur, un disjoncteur, un combiné interrupteur-fusibles, un sectionneur, un sectionneur de mise à la terre ou un contacteur.

## Patentansprüche

1. Härtbare Harzformulierung, wobei diese Formulierung aus dem Inkontaktbringen einer Zusammensetzung, die zumindest einen Vorläufer P des härtbaren Harzes enthält, wobei dieser Vorläufer P zumindest eine Epoxidgruppe und gegebenenfalls zumindest eine Hydroxylgruppe enthält, mit einem Initiator R und einem Beschleuniger A resultiert, **dadurch gekennzeichnet, dass** der Initiator R ausgewählt ist aus der Gruppe bestehend aus einem Bortrifluorid-Amin-Komplex und (4-Isopropylphenyl)-(4-methylphenyl)-iodo-niumtetrakis-(pentafluorphenyl)-borat(1-), und dass der Beschleuniger A ein organisches Peroxid ist.

2. Formulierung nach Anspruch 1, wobei jeder Vorläufer P ausgewählt ist aus der Gruppe bestehend aus einem Bisphenol-A-Diglycidyletherharz, einem Bisphenol-F-Diglycidyletherharz, einem Phenol-Novolak-Epoxidharz, einem Cresol-Novolak-Epoxidharz, einem cycloaliphatischen Epoxidharz, einem Polyoxyalkylenglykol-Epoxidharz, einem Silicon-Epoxidharz, einem epoxidierten Pflanzenöl, einem epoxidierten Polyol und einem epoxidierten Polyphenol.

3. Formulierung nach Anspruch 2, wobei die Zusammensetzung ein Bisphenol-A-Diglycidyletherharz enthält.

4. Formulierung nach Anspruch 2 oder 3, wobei die Zusammensetzung ein epoxidiertes Sojaöl enthält.

5. Formulierung nach einem der Ansprüche 1 bis 4, wobei der Initiator R (4-Isopropylphenyl)-(4-methylphenyl)-iodoniumtetrakis -pentafluorphenyl)-borat(1-) ist.

6. Formulierung nach einem der Ansprüche 1 bis 5, wobei der Beschleuniger A Dicumylperoxid oder tert-Butylperoxybenzoat ist.

7. Formulierung nach einem der Ansprüche 1 bis 6, ferner enthaltend zumindest ein Additiv F, ausgewählt aus der Gruppe bestehend aus Füllstoffen, Farbstoffen, Pigmenten, Flammschutzmitteln, Antioxidationsmitteln, Schmierstoffen, Weichmachern, reaktiven Verdünnungsmitteln und Lösungsmitteln.

8. Formulierung nach einem der Ansprüche 1 bis 7, wobei die Massenanteile bezogen auf die Gesamtmasse der Formulierung folgende sind:
- 29,5 % bis 99,9 % des bzw. der Vorläufer P,
- 0,1 % bis 0,5 % der aus dem Initiator R und dem Beschleuniger A gebildeten Einheit, und
- 0 % bis 70 % des bzw. der Additive F.

9. Material, **dadurch gekennzeichnet, dass** es durch Härten einer härtbaren Harzformulierung nach einem der Ansprüche 1 bis 8 erhalten wird.

10. Verfahren zum Herstellen eines Materials aus einer härtbaren Harzformulierung nach einem der Ansprüche 1 bis 8, wobei das Verfahren aufeinanderfolgend in dieser Reihenfolge umfasst:
(a) Inkontaktbringen einer ersten Zusammensetzung, die zumindest einen Vorläufer P des härtbaren Harzes enthält, wobei dieser Vorläufer P zumindest eine Epoxidgruppe und gegebenenfalls zumindest eine Hydroxylgruppe enthält, mit einem Initiator R und einem Beschleuniger A, wobei der Initiator R ausgewählt ist aus der Gruppe bestehend aus einem Bortrifluorid-Amin-Komplex und (4-Isopropylphenyl)-(4-methylphenyl)-iodoniumtetrakis-(pentafluorphenyl)-borat(1-), und der Beschleuniger A ein organisches Peroxid ist,
(b) Informbringen der aus Schritt (a) erhaltenen Formulierung und
(c) Zuführen von Energie an die in Schritt (b) in Form gebrachte Formulierung, wodurch das Material durch Polymerisation des härtbaren Harzes erhalten wird.

11. Verfahren nach Anspruch 10, wobei in Schritt (c) die Energie eine thermische Energie ist.

12. Verwendung der Formulierung nach einem der Ansprüche 1 bis 8 zum Herstellen eines Materials, das für die Luftfahrt- und Automobilindustrie, die Nieder-, Mittel- und Hochspannungs-Elektroindustrie, die Elektronik, den Sport, Werkzeuge, Laminate und Verbundstoffe oder Beschichtungen bestimmt ist.

13. Verwendung nach Anspruch 12 für die Herstellung eines Isoliermaterials, insbesondere eines Isoliermaterials eines Nieder-, Mittel- oder Hochspannungsschaltgeräts, beispielsweise eines Lastschalters, eines Leistungsschalters, einer Schalter-Sicherungs-Einheit, eines Trennschalters, eines Erdungsschalters oder eines Schützes.

14. Verwendung eines Materials nach Anspruch 9 bei der Luftfahrt- und Automobilindustrie, der Nieder-, Mittel- und Hochspannungs-Elektroindustrie, der Elektronik, dem Sport, Werkzeugen, Laminaten und Verbundstoffen oder Beschichtungen.

15. Verwendung nach Anspruch 14 als elektrisch isolierendes Material bei einem Nieder-, Mittel- oder Hochspannungsschaltgerät, beispielsweise einem Lastschalter, einem Leistungsschalter, einer Schalter-Sicherungs-Einheit, einem Trennschalter, einem Erdungsschalter oder einem Schütz.

## Claims

1. A curable resin formulation, this formulation resulting from contacting a composition comprising at least one precursor P of the curable resin, this precursor P comprising at least one epoxide group and, possibly, at least one hydroxyl group, with an initiator R and an accelerator A, **characterised in that** the initiator R is chosen from the group consisting of a boron trifluoride-amine complex and (4-isopropylphenyl)(4-methylphenyl)iodonium tetrakis(pentafluorophenyl)borate(1-), and **in that** the accelerator A is an organic peroxide.

2. The formulation according to claim 1, wherein each precursor P is chosen from the group consisting of a bisphenol A diglycidylether resin, a bisphenol F diglycidylether resin, an epoxide phenol novolac resin, an epoxide cresol novolac resin, a cycloaliphatic epoxide resin, a polyoxyalkylene glycol epoxide resin, a silicone epoxide resin, an epoxidised plant oil, an epoxidised polyol and an epoxidised polyphenol.

3. The formulation according to claim 2, wherein the composition comprises a bisphenol A diglycidylether resin.

4. The formulation according to claim 2 or 3, wherein the composition comprises an epoxidised soybean oil.

5. The formulation according to any of claims 1 to 4, wherein the initiator R is (4-isopropylphenyl)(4-methylphenyl)iodonium tetrakis(pentafluorophenyl)borate(1-).

6. The formulation according to any of claims 1 to 5, wherein the accelerator A is dicumyl peroxide or *tert*-butyl peroxybenzoate.

7. The formulation according to any of claims 1 to 6, which further comprises at least one additive F chosen from the group consisting of fillers, colorants, pigments, flame retardant agents, antioxidant agents, lubricants, plasticisers, reactive diluents and solvents.

8. The formulation according to any of claims 1 to 7, wherein the mass proportions, with respect to the total mass of the formulation, are the following ones:
- from 29,5% to 99,9% of the precursor(s) P,
- from 0,1% to 0,5% of the whole formed by the initiator R and the accelerator A, and
- from 0% to 70% of the additive(s) F.

9. A material, **characterised in that** it is obtained by curing a curable resin formulation according to any of claims 1 to 8.

10. A method for manufacturing a material from a curable resin formulation according to any of claims 1 to 8, which method successively comprising in this order:
(a) contacting a first composition comprising at least one precursor P of the curable resin, this precursor P comprising at least one epoxide group and, possibly, at least one hydroxyl group, with an initiator R and an accelerator A, the initiator R being chosen from the group consisting of a boron trifluoride-amine complex and (4-isopropylphenyl)(4-methylphenyl)iodonium tetrakis(pentafluorophenyl)borate(1-), and the accelerator A being an organic peroxide,
(b) shaping the formulation obtained at the end of step (a), and
(c) applying an energy to the formulation shaped in step (b), whereby the material is obtained by polymerising the curable resin.

11. The method according to claim 10, wherein, during step (c), the energy is thermal energy.

12. A use of the formulation according to any of claims 1 to 8 for manufacturing a material intended for aeronautic and automobile industry, for low, medium or high voltage electric industry, for electronics, for sport, for toolings, for laminates and composites, or even for coatings.

13. The use according to claim 12, for manufacturing an insulating material, in particular an insulating material of a low, medium or high voltage cutoff apparatus, such as a switch, a circuit breaker, a switch-fuse combination, a disconnector, an earthing switch disconnector or a contactor.

14. The use of a material according to claim 9 in aeronautic and automobile industry, in low, medium or high voltage electric industry, in electronics, in sport, in toolings, in laminates and composites, or even in coatings.

15. The use according to claim 14 as an electric insulation material in a low, medium or high voltage cutoff apparatus, such as a switch, a circuit breaker, a switch-fuse combination, a disconnector, an earthing switch disconnector or a contactor.
